# EUROPÄISCHE PATENTSCHRIFT

(11) **EP 2 792 892 B1**
(45) Veröffentlichungstag und Bekanntmachung des Hinweises auf die Patenterteilung: **17.08.2016**
(21) Anmeldenummer: 13001995.3
(22) Anmeldetag: 16.04.2013
(51) Int. Cl.: F16B 37/06

(54) **Blindnietmutter**
Blind rivet nut
Ecrou à sertir

(43) Veröffentlichungstag der Anmeldung: 22.10.2014
(73) Patentinhaber: GESIPA Blindniettechnik GmbH, 64546 Mörfelden-Walldorf (DE)
(72) Erfinder: Wörner, Ilka, 64546 Mörfelden-Walldorf (DE); Gross, Johannes, 64546 Mörfelden-Walldorf (DE); Gärtner, Richard, 64546 Mörfelden-Walldorf (DE)
(74) Vertreter: Knoblauch, Andreas

(56) Entgegenhaltungen:
- EP-A1- 0 305 868
- DE-A1- 10 342 316
- US-A- 3 461 771
- US-A- 3 789 728
- US-A- 4 177 710
- US-A1- 2008 193 256

## Beschreibung

Die Erfindung betrifft eine Blindnietmutter mit einem Nietschaft, der einen Setzkopf, einen Gewindeabschnitt mit einem Gewinde und einen Verformungsabschnitt zwischen dem Setzkopf und dem Gewindeabschnitt aufweist, der mindestens einen Verstärkungsbereich aufweist

Eine derartige Blindnietmutter ist beispielsweise aus EP 0 305 868 A1 bekannt. Die Niethülse weist vom Setzkopf ausgehend eine konstante Wandstärke auf, an den sich ein Abschnitt anschließt, in dem die Wandstärke kontinuierlich bis zum Gewindeabschnitt ansteigt.

Eine weitere Blindnietmutter ist beispielsweise aus EP 1 918 596 A1 bekannt.

Beim Setzen einer Blindnietmutter wird üblicherweise ein Gewindedorn in den Gewindeabschnitt eingeschraubt. Die Blindnietmutter wird dann in eine Bohrung in einem Bauteil eingesetzt. Danach wird ein Zug auf den Gewindedorn ausgeübt, so dass sich der Gewindeabschnitt auf den Setzkopf zubewegt. Dabei bildet der Verformungsabschnitt einen Schließkopf aus, so dass das Bauteil zwischen dem Setzkopf und dem Schließkopf eingeklemmt ist.

Bei relativ einfach ausgestalteten Blindnietmuttern hat der Verformungsabschnitt eine Größe, die an die Dicke des Bauteils angepasst ist, in dem die Blindnietmutter montiert werden soll. Wenn die Dicke des Bauteils von der Dicke abweicht, für die die Blindnietmutter vorgesehen ist, besteht das Risiko, dass der Schließkopf nicht richtig ausgebildet wird.
Man hat daher Blindnietmuttern vorgeschlagen, die im Verformungsabschnitt eine Schwächungszone aufweisen. Ein Beispiel hierfür findet sich in der oben genannten EP 1 918 596 A1. Die Verformung des Verformungsabschnitts soll dann in der Schwächungszone beginnen. Auf diese Weise möchte man die Ausbildung des Schließkopfes besser steuern können. Allerdings wird der Verformungsabschnitt durch den Schwächungsbereich mechanisch geschwächt, also etwas instabiler gemacht, so dass es auch hier gewisse Risiken im Hinblick auf die sichere Befestigung der Blindnietmutter in einem Bauteil gibt.
DE 103 42 316 A1 zeigt eine Blindnietmutter, bei dem ausgehend von einem Ende, an dem der Setzkopf angeordnet ist, Einprägnuten in einen Bereich eingebracht worden sind, der sich später innerhalb eines Werkstückes oder Werkstückstapels befinden soll, um eine Verformung dort zu verhindern. US 3 461 771 A zeigt eine Blindnietmutter, die nach dem Setzen mit einem Verstärkungsstift gefüllt wird, der den Schaft der Blindnietmutter radial aufweiten soll.

US 3 789 728 A zeigt eine Blindnietmutter, deren Nietschaft mit Längsschlitzen versehen ist. Etwa in der Mitte der Längsschlitze ist im Inneren des Nietschafts eine Stufe angeordnet, an der sich die Wandstärke des Nietschafts zum Gewindeabschnitt hin erhöht. Diese Stufe soll später eine Art Scharnier bilden.

US 2008/193256 A1 zeigt eine weitere Blindnietmutter, die an der dem Werkstück zugewandten Seite des Nietkopfes an dem dem Setzkopf benachbarten Abschnitt der Niethülse Vorsprünge aufweist, um eine Verdrehsicherung zu bilden.

Der Erfindung liegt die Aufgabe zugrunde, eine Blindnietmutter mit großem Klemmbereich und großer Befestigungssicherheit anzugeben.

Diese Aufgabe wird bei einer Blindnietmutter der eingangsgenannten Art dadurch gelöst, dass der Verstärkungsbereich einen kaltverfestigten Abschnitt des Verformungsabschnitts aufweist.

Man verzichtet also darauf, den Verformungsabschnitt zu schwächen. Man gestaltet den Verformungsabschnitt vielmehr so aus, dass er außerhalb des Verstärkungsbereichs genauso umgeformt werden kann, wie bei einer herkömmlichen Einbereichs-Blindnietmutter, die nur für eine bestimmte Dicke eines Werkstücks vorgesehen ist, und erschwert die Verformung in anderen Bereichen des Verformungsabschnitts dadurch, dass man diesen Bereich oder diese Bereiche verstärkt. Im Verstärkungsbereich hat der Verformungsabschnitt einen höheren Verformungswiderstand als außerhalb des Verstärkungsbereichs. Durch eine gezielte Anordnung des Verstärkungsbereichs (oder der Verstärkungsbereiche) kann man daher die Ausbildung des Schließkopfes gezielt steuern und zwar auch dann, wenn die Bauteile, in denen die Blindnietmutter befestigt wird, unterschiedliche Materialdicken aufweisen. Bei einer Kaltverfestigung wird das Material des Verformungsabschnitts verdichtet. Dadurch erhöht sich der Verformungswiderstand und es bildet sich der Verstärkungsbereich.

Vorzugsweise weist der Verstärkungsbereich in Umfangsrichtung mindestens eine Unterbrechung auf. Dies erleichtert die Herstellung. Man kann den Verstärkungsbereich beispielsweise so erzeugen, dass man einen Dorn in das Innere des Verformungsbereichs einführt und radial von außen Pressenelemente wirken lässt, die dann die Kaltverformung bewirken. Die Verwendung von mehreren in Umfangsrichtung verteilt angeordneten Pressenelementen führt dann dazu, dass zwischen den einzelnen Pressenelementen axial verlaufende Stege an der Außenseite des Verformungsabschnitts verbleiben, in denen keine oder nur eine geringe Kaltverfestigung stattgefunden hat.

Vorzugsweise weist der Verformungsabschnitt im Verstärkungsbereich zumindest in einem Teilbereich seines Umfangs eine zum Gewindeabschnitt hin abnehmende Wandstärke auf. Damit ergeben sich unterschiedlich stark verdichtete Bereiche im Verstärkungsbereich. Man wird zwar nicht unbedingt davon ausgehen können, dass bei der Kaltverformung verformtes Material des Verformungsabschnitts nur verdichtet wird, sondern es wird sich auch in geringem Umfang eine gewisse Verlagerung ergeben. Durch die abnehmende Wandstärke lässt sich jedoch das Verformungsverhalten des Verformungsabschnitts gezielt steuern.

Vorzugsweise ist die Wandstärke des Verstärkungsbereichs an dem dem Gewindeabschnitt zugewandten Ende um 15 bis 35 % geringer als die größte Wandstärke des Verformungsabschnitts. Damit lässt sich eine ausreichende Kaltverfestigung erzielen.

Bevorzugterweise nimmt die Wandstärke konisch ab. Damit werden Sprünge in der Materialdicke vermieden, die bei der Verformung des Verformungsabschnitts zu unerwünschten Ergebnissen führen könnten.

Bevorzugterweise ist der Verstärkungsbereich in einem vom Gewindeabschnitt ausgehenden Bereich des Verformungsabschnitts angeordnet. Damit wird der Verformungsabschnitt gerade dort gegen eine Verformung verstärkt, an der bei herkömmlichen Blindnietmuttern die Verformung eingesetzt hat. Der Übergang zwischen dem Gewindeabschnitt und dem Verformungsabschnitt bildet eine Art Gelenk oder Scharnier, an dem der Verformungsabschnitt beginnt, sich nach außen auszuwölben. Wenn man an dieser Stelle einen erhöhten Verformungswiderstand vorsieht, dann wird der Verformungsabschnitt gezwungen, sich in einer geringeren Entfernung zum Setzkopf zu verformen, so dass sich der Schließkopf gleich zu Beginn eines Setzvorganges möglichst dicht an der vom Setzkopf abgewandten Seite des Bauteils auszubilden beginnt, in dem die Blindnietmutter befestigt werden soll. Man kann also dafür sorgen, dass sich der Schließkopf immer sehr dicht an das Bauteil anlegt, unabhängig von dessen Dicke.

Da sich der Schließkopf bevorzugter Weise von der abgewandten Seite des Setzkopfes her bildet, kann so ein großer Schließkopf erzeugt werden. Dies ist vor allem von Vorteil, wenn die Blindnietmutter in Mischbauweisen eingesetzt wird. Durch die große Auflage des Schließkopfes verteilen sich die auftretenden Kräfte über diese möglichst große Fläche. Hierdurch ist eine Schädigung des Bauteils verringert.

Vorzugsweise weist der Gewindeabschnitt eine Gewindeachse auf und der Verstärkungsbereich weist einen sich entlang der Gewindeachse ändernden Verformungswiderstand auf. Insbesondere sollte der Verformungswiderstand zum Gewindeabschnitt hin zunehmen. Beim Setzen der Blindnietmutter wird sich der Verformungsabschnitt im Bereich des kleinsten Verformungswiderstandes verformen. Dies ist bei der beschriebenen Ausbildung immer der Bereich, der am dichtesten an der dem Setzkopf abgewandten Seite des Bauteils liegt. Dementsprechend wird sich der Schließkopf immer so ausbilden, dass er dicht an dieser Seite des Bauteils anliegt. Wenn das Bauteil eine größere Dicke hat, wird sich der Ort, an dem sich der Schließkopf ausbildet, zum Gewindeabschnitt hin verlagern.

Vorzugsweise ist der Verformungswiderstand in einem vom Gewindeabschnitt ausgehenden Bereich am größten. Damit wird das Risiko, dass der Verformungsabschnitt am Übergang zum Gewindeabschnitt hin ausknickt, klein gehalten.

Bevorzugterweise weist der Verstärkungsbereich eine axiale Länge im Bereich von 35 bis 65 % der axialen Länge des Verformungsabschnitts auf. Der Verstärkungsbereich erstreckt sich also über mindestens ein Drittel, vorzugweise bis zu einer Länge von zwei Dritteln des Verformungsabschnitts. Dies macht zwar die Herstellung der Blindnietmutter etwas aufwendiger, weil der Verformungsabschnitt über eine größere Länge hin kaltverfestigt werden muss. Es ergeben sich aber verbesserte Setzeigenschaften.

Vorzugsweise ist der Verformungsabschnitt am Außenumfang gerändelt. Die Rändelung, also eine Rillung in axiale Richtung, ist an sich bekannt, um eine Verdrehsicherung der Blindnietmutter in dem Bauteil zu bewirken, in dem die Blindnietmutter befestigt ist. In Verbindung mit dem Verstärkungsbereich hat die gerändelte Ausbildung den zusätzlichen Vorteil, dass man die Ausbildung des Schließkopfs noch besser steuern kann.

Die Erfindung wird im Folgenden anhand eines bevorzugten Ausführungsbeispiels in Verbindung mit der Zeichnung beschrieben. Hierin zeigen:
- Fig. 1: eine Seitenansicht einer Blindnietmutter,
- Fig. 2: einen Schnitt II-II nach Fig. 1 und
- Fig. 3: einen Längsschnitt durch die Blindnietmutter nach Fig. 1

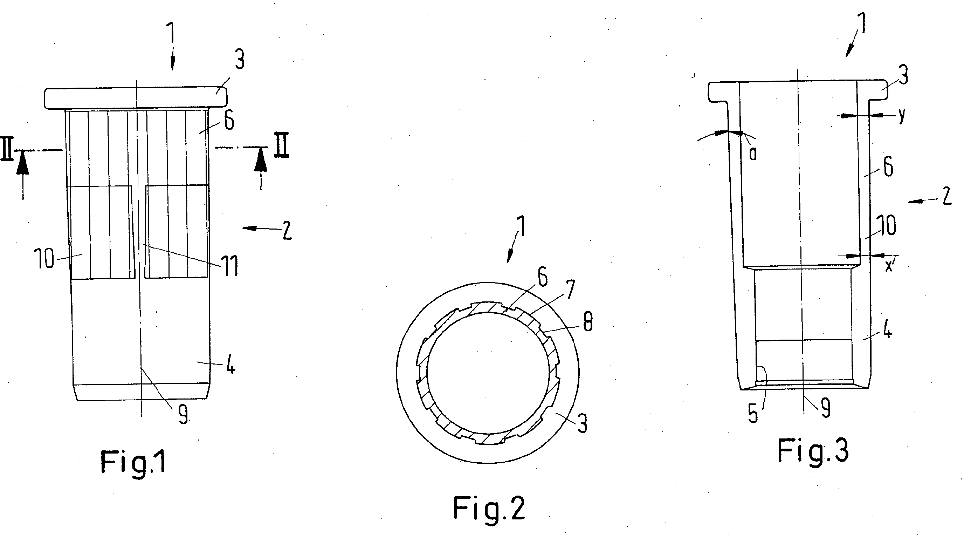

Eine Blindnietmutter 1 weist einen Nietschaft 2 auf. Der Nietschaft 2 weist an einem Ende einen Setzkopf 3 und am anderen Ende einen Gewindeabschnitt 4 auf. Im Gewindeabschnitt 4 ist ein Innengewinde 5 ausgebildet. Zwischen dem Setzkopf 3 und dem Gewindeabschnitt 4 ist ein Verformungsabschnitt 6 vorgesehen. Wie in Fig. 3 zu erkennen ist, ist die Wandstärke des Verformungsabschnitts 6 wesentlich geringer als die Wandstärke des Gewindeabschnitts 4.

Der Verformungsabschnitt 6 ist an seinem Außenumfang gerändelt, d. h. er weist in Umfangsrichtung verteilt abwechselnd Erhebungen 7 und Täler 8 auf, die jeweils in Axialrichtung verlaufen. Der Begriff "axial" bezieht sich auf eine Gewindeachse 9 des Innengewindes 5, die mit einer Längsachse der Blindnietmutter 1 übereinstimmt.

Der Verformungsabschnitt 6 weist einen Verstärkungsbereich 10 auf. Der Verstärkungsbereich 10 schließt sich an den Gewindeabschnitt an. Er ist durch einen kaltverfestigten Abschnitt des Verformungsabschnitts gebildet. Der Verstärkungsbereich 10 kann, wie dies in Fig. 1 zu erkennen ist, in Umfangsrichtung unterbrochen sein. Zwischen in Umfangsrichtung benachbarten Segmenten des Verstärkungsbereichs 10 kann also durchaus ein Steg 11 radial vorstehen, in dem der Verformungsabschnitt 6 nicht oder weniger stark kaltverfestigt ist.

Der Verstärkungsbereich 10 wird beispielsweise dadurch gebildet, dass ein Dorn in den Verformungsabschnitt 6 eingeführt wird und dann der Verformungsabschnitt im Verstärkungsbereich 10 radial von außen unter Druck gesetzt wird, so dass sich das Material des Nietschaftes 2 im Verstärkungsbereich 10 verdichtet und verfestigt. Kleine Materialverlagerungen schaden hier nicht. Ein Material, das kaltverfestigt ist, hat einen größeren Verformungswiderstand als das gleiche Material ohne Kaltverfestigung.

Der Verformungsabschnitt 6 hat im Verstärkungsbereich 10 eine abnehmende Wandstärke. Die Wandstärke nimmt vorzugsweise konisch ab, wobei ein Konuswinkel a nur wenige Grad beträgt. Der Verstärkungsbereich 10 weist anschließend an dem Gewindeabschnitt 4 eine Dicke x auf, die um 15 bis 35 %, beispielsweise etwa 25 %, geringer ist als eine Wandstärke y des Verformungsabschnitts 6 am Setzkopf 3.

Der Verstärkungsbereich 10 hat einen sich entlang der Gewindeachse 9 ändernden Verformungswiderstand, der in einem vom Gewindeabschnitt 4 ausgehenden Bereich am größten ist. Der Verformungswiderstand nimmt also in Richtung auf den Setzkopf 3 hin zu.

Wenn die Blindnietmutter in ein Bauteil eingesetzt wird, beispielsweise in eine Platte, bis der Setzkopf 3 an der einen Seite der Platte anliegt, und ein Zug auf den Gewindeabschnitt 4 ausgeübt wird, dann wird sich der Verformungsabschnitt 6 dort verformen, wo der Verformungswiderstand am geringsten ist. Dies ist der Bereich des Verformungsabschnitts 6, der dem Bauteil am nächsten ist. Dementsprechend wird sich der Schließkopf immer unmittelbar im Anschluss an das Bauteil ausbilden, unabhängig von der Dicke des Bauteils.

Man kann auf diese Weise eine Blindnietmutter 1 erzielen, die einen Klemmbereich in der Größenordnung von 0,5 bis 8,5 mm hat, d. h. das Bauteil, in dem die Blindnietmutter 1 befestigt werden kann, kann eine Dicke im Bereich von 0,5 bis 8,5 mm haben, ohne das sich Probleme bei der Ausbildung des Schließkopfs und bei der sicheren Befestigung der Blindnietmutter 1 in dem Bauteil ergeben.

Die Rändelung des Verformungsabschnitts 6 bewirkt zum einen eine Verdrehsicherung. Zum anderen erleichtert sie die Verformung des Verformungsabschnitts 6 zur Ausbildung des Schließkopfs.

## Patentansprüche

1. Blindnietmutter (1) mit einem Nietschaft (2), der einen Setzkopf (3), einen Gewindeabschnitt (4) mit einem Gewinde (5) und einen Verformungsabschnitt (6) zwischen dem Setzkopf (3) und dem Gewindeabschnitt (4) aufweist, der mindestens einen Verstärkungsbereich (10) aufweist, **dadurch gekennzeichnet, dass** der Verstärkungsbereich (10) einen kaltverfestigten Abschnitt des Verformungsabschnitts (6) aufweist.

2. Blindnietmutter nach Anspruch 1, **dadurch gekennzeichnet, dass** der Verstärkungsbereich (10) in Umfangsrichtung mindestens eine Unterbrechung (11) aufweist.

3. Blindnietmutter nach Anspruch 1 oder 2, **dadurch gekennzeichnet, dass** der Verformungsabschnitt (6) im Verstärkungsbereich (10) zumindest in einem Teilbereich seines Umfangs eine zum Gewindeabschnitt hin abnehmende Wandstärke aufweist.

4. Blindnietmutter nach Anspruch 3, **dadurch gekennzeichnet, dass** die Wandstärke des Verstärkungsbereichs (10) an dem Gewindeabschnitt (4) zugewandten Ende um 15 bis 35% geringer ist als die größte Wandstärke des Verformungsabschnitts (6).

5. Blindnietmutter nach Anspruch 3 oder 4, **dadurch gekennzeichnet, dass** die Wandstärke konisch abnimmt.

6. Blindnietmutter nach einem der Ansprüche 1 bis 5, **dadurch gekennzeichnet, dass** der Verstärkungsbereich (10) in einem vom Gewindeabschnitt (4) ausgehenden Bereich des Verformungsabschnitts (6) angeordnet ist.

7. Blindnietmutter nach einem der Ansprüche 1 bis 6, **dadurch gekennzeichnet, dass** der Gewindeabschnitt (4) eine Gewindeachse (9) aufweist und der Verstärkungsbereich (10) einen sich entlang der Gewindeachse (9) ändernden Verformungswiderstand aufweist.

8. Blindnietmutter nach Anspruch 7, **dadurch gekennzeichnet, dass** der Verformungswiderstand in einem vom Gewindeabschnitt (4) ausgehenden Bereich am größten ist.

9. Blindnietmutter nach einem der Ansprüche 1 bis 8, **dadurch gekennzeichnet, dass** der Verstärkungsbereich (10) eine axiale Länge im Bereich von 35 bis 65% der axialen Länge des Verformungsabschnitts (6) aufweist.

10. Blindnietmutter nach einem der Ansprüche 1 bis 9, **dadurch gekennzeichnet, dass** der Verformungsabschnitt (10) am Außenumfang gerändelt ist.

## Claims

1. Blind rivet nut (1) with a rivet shank (2) comprising a set head (3), a threaded section (4) having a thread (5), and a deformation section (6) arranged between the set head (3) and the threaded section (4), having at least one reinforcement region (10), **characterized in that** the reinforcement section (10) has a work-hardened section of the deformation section (6).

2. Blind rivet nut according to claim 1, **characterized in that** the reinforcement region (10) has at least one interruption (11) in a circumferential direction.

3. Blind rivet nut according to claim 1 or 2, **characterized in that** the deformation section (6) has in its reinforcement region (10) in at least a partial region of its circumference a wall thickness decreasing in a direction of the threaded section.

4. Blind rivet nut according to claim 3, **characterized in that** the wall thickness of the reinforcement section (10) at an end facing the threaded section (4) is smaller than a largest wall thickness of the deformation section (6) by 15% to 35 %.

5. Blind rivet nut according to claim 3 or 4, **characterized in that** the wall thickness decreases conically.

6. Blind rivet nut according to any of claims 1 to 5, **characterized in that** the reinforcement region (10) is arranged in a region of the deformation section (6) starting from the threaded section (4).

7. Blind rivet nut according to any of claims 1 to 6, **characterized in that** the threaded section (4) has a thread axis (9) and the reinforcement region (10) has a deformation resistance varying along the thread axis (9).

8. Blind rivet nut according to claim 7, **characterized in that** the deformation resistance is greatest in a region starting from the threaded section (4).

9. Blind rivet nut according to any of claims 1 to 8, **characterized in that** the reinforcement region (10) has an axial length within the range of 35% to 65% of an axial length of the deformation section (6).

10. Blind rivet nut according to any of claims 1 to 9, **characterized in that** the deformation section (10) is knurled on an outer circumference.

## Revendications

1. Ecrou borgne à sertir (1) avec une tige de rivet (2) qui présente une tête de pose (3), une section filetée (4) avec un filetage (5) et une section de déformation (6) entre la tête de pose (3) et la section filetée (4) qui présente au moins une zone de renforcement (10), **caractérisé en ce que** la zone de renforcement (10) présente une section écrouie de la section de déformation (6).

2. Ecrou borgne à sertir selon la revendication 1, **caractérisé en ce que** la zone de renforcement (10) présente dans le sens périphérique, au moins une interruption (11).

3. Ecrou borgne à sertir selon la revendication 1 ou 2, **caractérisé en ce que** la section de déformation (6) présente dans la zone de renforcement (10) au moins dans une zone partielle de sa périphérie, une épaisseur de paroi décroissant vers la section filetée.

4. Ecrou borgne à sertir selon la revendication 3, **caractérisé en ce que** l'épaisseur de paroi de la zone de renforcement (10) est plus petite de 15 à 35 % sur l'extrémité tournée vers la section filetée (4) que l'épaisseur de paroi la plus grande de la section de déformation (6).

5. Ecrou borgne à sertir selon la revendication 3 ou 4, **caractérisé en ce que** l'épaisseur de paroi décroît de manière conique.

6. Ecrou borgne à sertir selon l'une quelconque des revendications 1 à 5, **caractérisé en ce que** la zone de renforcement (10) est agencée dans une zone sortant de la section filetée (4) de la section de déformation (6).

7. Ecrou borgne à sertir selon l'une quelconque des revendications 1 à 6, **caractérisé en ce que** la section filetée (4) présente un axe fileté (9) et la zone de renforcement (10) présente une résistance à la déformation se modifiant le long de l'axe fileté (9).

8. Ecrou borgne à sertir selon la revendication 7, **caractérisé en ce que** la résistance de déformation est la plus grande dans une zone sortant de la section filetée (4).

9. Ecrou borgne à sertir selon l'une quelconque des revendications 1 à 8, **caractérisé en ce que** la zone de renforcement (10) présente une longueur axiale dans la plage de 35 à 65 % de la longueur axiale de la section de déformation (6).

10. Ecrou borgne à sertir selon l'une quelconque des revendications 1 à 9, **caractérisé en ce que** la section de déformation (10) est moletée sur la périphérie extérieure.
